# DEMANDE DE BREVET EUROPEEN

(11) **EP 1 217 368 A1**
(43) Date de publication de la demande: **26.06.2002**
(21) Numéro de dépôt: 01403281.7
(22) Date de dépôt: 18.12.2001
(51) Int. Cl.: G01N 27/447

(54) **Plaque de gel d'électrophorese à tranchées**

(30) Priorité: 21.12.2000 FR 0016735
(71) Demandeur: Artigue, Marc, 91470 Milly la Forêt (FR)
(72) Inventeur: Artigue, Marc, 91470 Milly la Forêt (FR)
(74) Mandataire: Eidelsberg, Olivier

(57) **Abrégé**

Dispositif d'analyse électrophorétique, comportant un substrat 1, notamment en verre, sur lequel repose un gel 10 d'électrophorèse, notamment de polyacrylamide, et deux électrodes 8, 9, à savoir une anode et une cathode, disposés de manière à être séparées l'une de l'autre par du gel, caractérisé en ce qu'il est formé dans le gel 10 au moins une tranchée 3, 4 et de préférence deux tranchées 3, 4 à distance l'une de l'autre, et au moins une électrode et de préférence les deux électrodes 8, 9 sont en un matériau conducteur de l'électricité et résistant à la corrosion, notamment en un métal résistant à la corrosion et sont disposées de manière à être en contact avec des liquides électrolytiques ou tampons lorsque ceux-ci sont contenus dans les tranchées 3, 4.

## Description

La présente invention concerne des dispositifs pour réaliser des séparations de molécules par électrophorèse, notamment pour séparer des molécules d'ADN.

Les dispositifs d'électrophorèse actuels sont constitués d'une plaque de gel, notamment un gel en polyacrylamide, disposée sur une plaque ou substrat en verre horizontale et de deux électrodes éponges imprégnées de solution électrolytique, les électrodes étant disposées aux deux extrémités de la plaque de gel de manière à créer un champ électrique sensiblement uniforme sur tout le gel entre elles pour permettre la migration des molécules à séparer en fonction de leurs charges propres.

Ce genre de dispositif d'analyse électrophorétique présente l'inconvénient majeur de nécessiter un entretien constant dans le temps et fastidieux. En effet, d'une part il convient de s'assurer constamment que les éponges n'ont pas séché (si c'était le cas il n'y aurait plus formation d'un champ électrique entre elles le long du gel) et d'autre part, les éponges ont tendance à relâcher des gouttes, les gouttes tombant alors sur le gel de polyacrylamide et entraînant des détériorations de celui-ci.

Un autre type de dispositifs d'analyse électrophorétique s'est développé ces dernières années. Il s'agit de la technique par gel dit capillaire. Des tubes capillaires de gel d'électrophorèse sont réalisés entre des liquides de charge positive et négative respectivement. Les tubes capillaires sont disposés entre les deux liquides sous la forme par exemple de faisceaux. Ce type de dispositif n'a pas les inconvénients des dispositifs à électrodes à éponge mentionnés ci-dessus. Mais, ils sont très fragiles, les tubes capillaires ayant une tendance marquée à se briser ou à se boucher, nécessitant leur remplacement. Ce remplacement, peut s'avérer particulièrement coûteux à la longue et nécessiter de l'argent et du temps qui serait mieux employé par les laborantins à effectuer des recherches.

La présente invention vise un dispositif d'analyse électrophorétique comportant un gel à plat qui est plus simple d'utilisation que les dispositifs à électrodes en éponge, et notamment ne nécessite pas un entretien constant ou quasi-constant du dispositif, et qui dans le même temps est plus fiable et plus robuste que les systèmes capillaires actuels.

Suivant l'invention, le dispositif d'analyse électrophorétique comportant un substrat en verre sur lequel repose un gel d'électrophorèse notamment d'épaisseur sensiblement constante, notamment de polyacrylamide, et deux électrodes, à savoir une anode et une cathode, disposées de manière à être séparées l'une de l'autre par du gel, est caractérisé en ce qu'il est formé dans le gel au moins une et de préférence deux tranchées à distance l'une de l'autre, le fond de chaque tranchée étant délimité par le substrat en verre, et au moins une électrode, de préférence les deux électrodes sont en un matériau conducteur de l'électricité et résistant à la corrosion et sont disposées de manière à être en contact avec des liquides électrolytiques lorsque ceux-ci sont contenus dans les tranchées.

En prévoyant ainsi ces tranchées dans le gel pour recevoir les liquides électrolytiques, on peut dans le cas de dispositifs électrophorétiques à plat se passer maintenant des électrodes en éponge nécessitant un entretien de tous les instants, et qui en même temps est simple et robuste.

Suivant un perfectionnement de l'invention, les électrodes en métal, par exemple en platine ou en or, sont déposées sur le fond des tranchées, sur le verre, notamment par des procédés de dépôt sous vide ou par sérigraphie.

Suivant un perfectionnement de l'invention, les bords supérieurs des tranchées sont surélevés par rapport à la surface supérieure du gel de sorte que la profondeur des tranchées est supérieure à l'épaisseur du gel entre les tranchées.

Par ces surélévations, on augmente le volume des tranchées capable de recevoir des liquides électrolytiques ou tampons, ce qui permet d'obtenir un liquide tampon bien homogène et donc un champ électrique bien uniforme le long du gel d'électrophorèse bien uniforme.

Suivant un autre mode de réalisation de l'invention, les électrodes en métal, notamment en platine ou en or, plongent dans la partie des tranchées destinée à recevoir du liquide tampon.

Suivant un perfectionnement de l'invention, il est prévu également des moyens de circulation destinés à faire circuler les liquides tampons à l'intérieur des tranchées. On obtient ainsi des liquides tampons plus homogènes et donc un champ électrique plus uniforme entre les tranchées.

Suivant un mode de réalisation préféré de l'invention, l'épaisseur du gel est comprise entre 0,5 et 3 mm, la profondeur des tranchées est comprise entre 2 et 10 mm, de préférence entre 2 et 5 mm, tandis que la largeur des tranchées est comprise entre 2 et 15 mm, de préférence entre 3 et 10 mm.

On décrit maintenant deux modes de réalisation de l'invention uniquement à titre d'exemple en se référant aux dessins, dans lesquels :
la figure 1 est une vue en perspective d'un premier mode de réalisation d'un dispositif suivant l'invention ;
la figure 2 est une vue en perspective du substrat et des électrodes du dispositif de la figure 1, sans le gel ; et

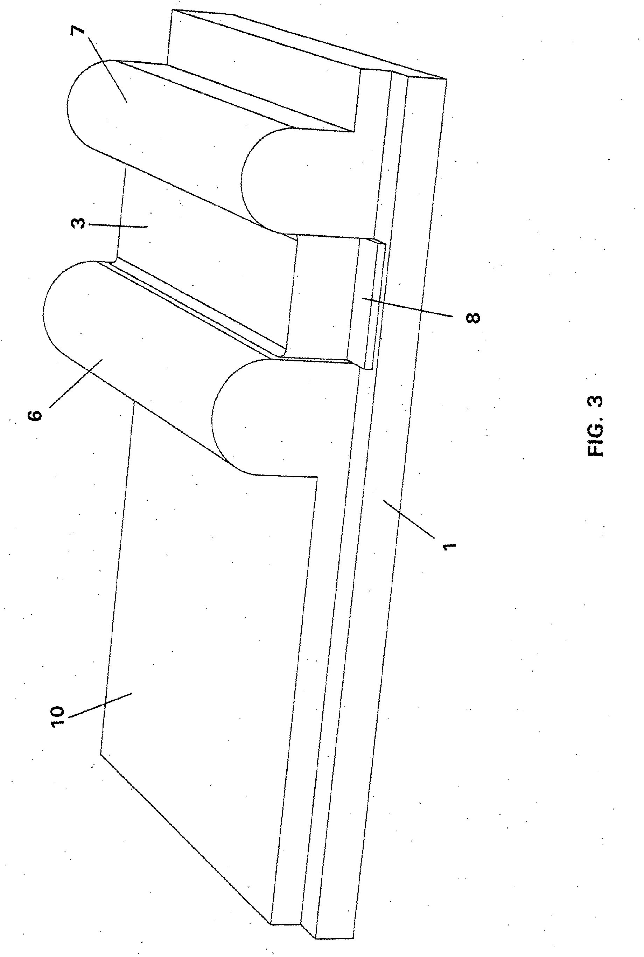

la figure 3 est une vue en coupe partielle du dispositif de la figure 2 au niveau du canal de droite de la figure 1.

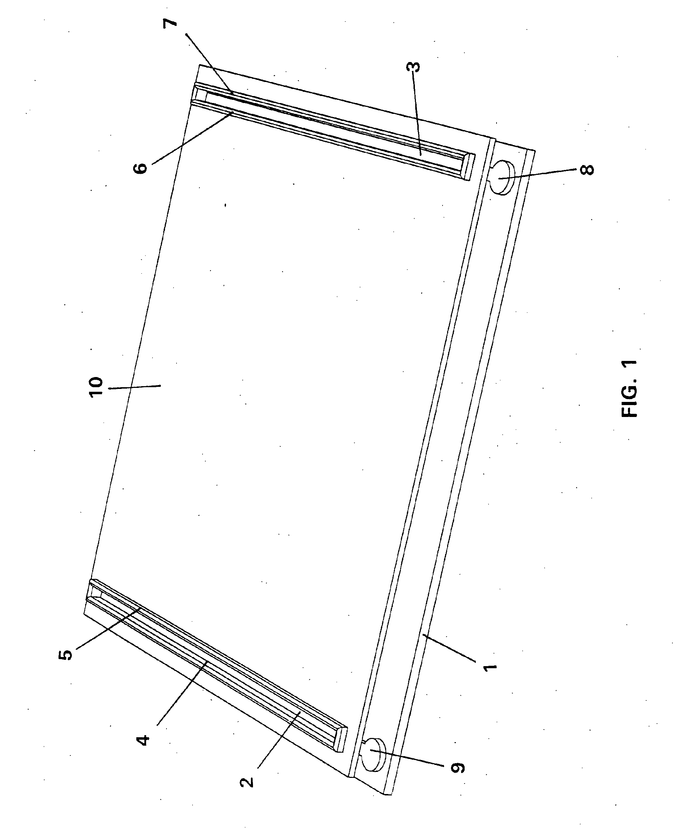

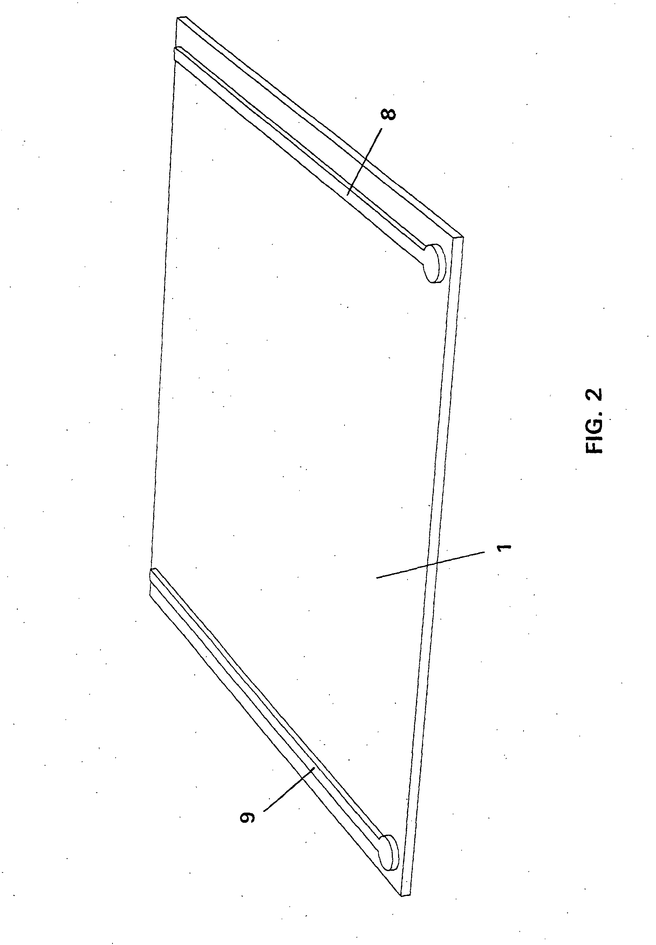

Comme on le voit à la figure 1, le dispositif suivant l'invention comporte un substrat 1 en verre disposé horizontalement à plat, et de forme rectangulaire. Sur ce substrat en verre, il est déposé de manière sensiblement uniforme, notamment en une épaisseur uniforme, un gel 10 destiné à permettre l'analyse électrophorétique, notamment un gel de polyacrylamide. D'autres types de gel, notamment des gels d'agarose pourraient bien évidemment également être utilisés. De part et d'autre du gel, dans le sens de la longueur et à une distance l'un de l'autre comprise par exemple entre 50 cm et 1 m, il est formé dans le gel deux tranchées 2 et 3 gauche et droit à la figure, perpendiculairement à la direction en longueur à la figure de la plaque de verre et du gel et s'étendant sensiblement sur toute la largeur du gel. Les bords supérieurs de ces deux tranchées 2 et 3 comportent des moulures 4, 5, 6, 7 de sorte que ces bords sont surélevés par rapport à la partie plate utile du gel d'électrophorèse centrale. La profondeur ou hauteur des tranchées est de 3 mm. L'épaisseur du gel est de 1 mm. La largeur des tranchées, c'est-à-dire la dimension suivant le sens de la longueur du gel des tranchées, est de 5 mm. Les deux parties d'extrémité, dont une qui apparaît aux figures 1 et 2, des tranchées sont bouchées par des parois en verre.

Suivant une variante elles peuvent chacune communiquer avec un système de circulation respectif permettant de faire circuler du liquide dans chaque tranchée, indépendamment l'un de l'autre. Chaque tranchée a son propre système de circulation et les deux systèmes de circulation ne sont pas en contact l'un avec l'autre pour éviter tout court circuit de l'ensemble.

Comme on le voit à la figure 1, dans le fond de chaque tranchée sont déposées des électrodes 8, 9, à savoir une anode 8 à droite et une cathode 9 à gauche par exemple, ces électrodes étant en un matériau métallique conducteur résistant à la corrosion, par exemple du platine ou de l'or.

Le dépôt sur le fond du substrat en verre est réalisé par un procédé bien connu de dépôt sous vide ou par sérigraphie. Les deux électrodes sont reliées à un système non représenté d'alimentation en courant fournissant une tension comprise entre 300 et 600 Volts par exemple.

Suivant un autre mode de réalisation, les électrodes en platine ne sont pas déposées sur le fond en verre des tranchées, mais sont des électrodes qui plongent par le haut dans le liquide contenu dans les tranchées.

En utilisation, chaque tranchée est emplie de liquide tampon, par exemple une solution de TBE, soit triborate éthylène di-amino tétracétique. On dépose alors sur le gel quelques gouttes de la solution à séparer, et les différentes molécules et notamment les protéines ou les ADN, qui se trouvent dans ces solutions migrent en fonction de leur charge respective entre la tranchée positive et la tranchée négative en s'éloignant plus ou moins en fonction de leur charge de la tranchée positive par exemple.

Entre les deux bords 5, 6 intérieurs, le gel est d'épaisseur sensiblement constante.

## Revendications

1. Dispositif d'analyse électrophorétique, comportant un substrat (1), notamment en verre, sur lequel repose un gel (10) d'électrophorèse, notamment de polyacrylamide, et deux électrodes (8, 9), à savoir une anode et une cathode, disposés de manière à être séparées l'une de l'autre par du gel, **caractérisé en ce qu'**il est formé dans le gel (10) au moins une tranchée (3, 4) et de préférence deux tranchées (3, 4) à distance l'une de l'autre, et au moins une électrode et de préférence les deux électrodes (8, 9) sont en un matériau conducteur de l'électricité et résistant à la corrosion, notamment en un métal résistant à la corrosion et sont disposées de manière à être en contact avec des liquides électrolytiques ou tampons lorsque ceux-ci sont contenus dans les tranchées (3, 4).

2. Dispositif suivant la revendication 1, **caractérisé en ce que** le fond d'au moins une tranchée et de préférence des deux tranchées est délimité par le substrat.

3. Dispositif suivant la revendication 2, **caractérisé en ce que** les électrodes sont déposées sur le fond des tranchées, sur le substrat, notamment par des procédés de dépôt sous vide ou par sérigraphie.

4. Dispositif suivant la revendication 1, **caractérisé en ce que** les électrodes sont disposées de manière à plonger au moins l'une de leur extrémité dans la partie des tranchées destinée à recevoir du liquide.

5. Dispositif suivant l'une des revendications 1 à 4, **caractérisé en ce que** le gel, entre les bords des tranchées, est d'épaisseur sensiblement constante.

6. Dispositif suivant l'une des revendications 1 à 5, **caractérisé en ce que** les bords (4, 5, 6, 7) supérieurs des tranchées sont surélevés par rapport à la surface supérieure du gel (10), de sorte que les tranchées ont une profondeur supérieure à l'épaisseur du gel entre les tranchées.

7. Dispositif suivant l'une des revendications 1 à 6, **caractérisé en ce qu'**il est prévu pour chaque tranchée des moyens de circulation destinés à faire circuler les liquides tampons à l'intérieur des tranchées.

8. Dispositif suivant l'une des revendications 1 à 7, **caractérisé en ce que** l'épaisseur du gel est comprise entre 0,5 et 3 mm, la profondeur des tranchées est comprise entre 2 et 10 mm, de préférence entre 2 et 5 mm et la largeur des tranchées est comprise entre 2 et 15 mm, de préférence 3 à 10 mm.
